# EUROPEAN PATENT APPLICATION

(11) **EP 2 361 834 A1**
(43) Date of publication of application: **31.08.2011**
(21) Application number: 11155184.2
(22) Date of filing: 21.02.2011
(51) Int. Cl.: B65B 19/34, B65B 51/22, B65B 51/30, B65B 9/20, B29C 65/08, B29C 65/74

(54) **Packaging machine for long pasta or the like with transverse ultrasound welding group**

(30) Priority: 26.02.2010 IT MI20100317
(71) Applicant: Altopack S.P.A., 55011 Altopascio (LU) (IT)
(72) Inventor: Badiani, Luca, 59100 Prato (IT); Cambi, Marco, 51100 Pistoia (IT)
(74) Representative: Mittler, Enrico

(57) **Abstract**

The packaging machine for pasta according to the present invention comprises an ultrasound transverse welding group (11) in which the edges of film to be welded and cut transversely are passed between two rotors (14, 15) with parallel axes (14, 15), one (14) of which carries at least one pair of sonotrodes (17) in diametrically opposite positions and the other (15) of which carries at least one pair of contrast anvils (19) in diametrically opposite positions. The two rotors (14, 15) are rotated in a synchronized manner and in phase with one another in such a manner that each of said sonotrodes (16) and each of said anvils (19) periodically come to be in facing positions to perform double welding with an intermediate cut of said edges of film (Fig. 8).

## Description

The present invention relates to a packaging machine for long pasta or the like with ultrasound longitudinal welding group.

Packaging machines for long pasta are known that insert the pasta horizontally inside an envelope being formed, consisting of a film of plastics fed on a horizontal path in which once a dose of pasta has been received, the lateral edges thereof are folded progressively downwards and are then approached below the pasta until a closed envelope is formed around the pasta. The envelope is closed permanently by reciprocal longitudinal welding of the two edges carried out at the end of the folding and approaching operation.

Welding is usually carried out by welding groups that use the heat generated by an electric current that passes along opposite electric wires (so-called "welding electrodes") of two parts of the welding group through which the two approaching edges of the film are passed.

A tubular envelope is thus formed that is further closed and cut in front of the dose of pasta by means of a transverse welding and cutting group, which performs two transverse welds separated by a cut, yet again normally using the heat generated by an electric current that passes through two pairs of parallel electric wires and with the further helps of a cutting blade interposed between the two pairs of electric wires.

The use of ultrasound welding groups is currently in the development phase, ultrasound welding groups use an ultrasound generator connected to an electrode known as a 'sonotrode' that cooperates with a fixed abutment known as an 'anvil' to perform reciprocal welding of interposed films of plastics.

The object of the present invention is to exploit ultrasound to make a packaging machine for long pasta with advantageous structural and functional features.

According to the present invention, a packaging machine for pasta is thus proposed that comprises feeding means for feeding a continuous film of plastics, folding means for folding the side edges of said film to form a tubular envelope on a horizontal path with side edges folded downwards and placed sided-by-side, introducing means for introducing a succession of doses of pasta or the like inside said tubular envelope, a longitudinal welding group inserted into said horizontal path to perform the reciprocal welding of said edges of film folded and approached and a transverse welding group arranged downstream of said longitudinal welding group to perform transverse welds and cuts of said tubular envelope to separate the tubular envelope into a succession of closed envelopes that are separated from one another, characterized in that said transverse welding group comprises two rotors with parallel axes between which the edges of film to be welded and cut transversely are passed, at least one pair of sonotrodes carried in diametrically opposite positions by a first rotor and fed by a generator of ultrasound located inside said first rotor and at least one pair of contrast anvils carried in diametrically opposite positions by a second rotor, said rotors being rotated in a synchronized manner and in phase with one another such that each of said sonotrodes and each of said anvils periodically comes to be in facing positions to perform double welding with an intermediate cut of said edges of film.

Following the generation of ultrasound, the sonotrode in contact with the anvil is subjected to a succession of vibrations that causes a temporal succession of contacts between the sonotrode and the anvil through the double reciprocal welding and the cut of the two edges of interposed film.

The features of the present invention will be made clear by the following detailed description of an embodiment thereof shown by way of example in the attached drawings, in which:
figure 1 shows a raised schematic representation of an example of a packaging machine for long pasta according to the present invention;
figure 2 shows schematically in cross section the conformation of the film filled with pasta and with edges that are folded but not yet approached before the passage through the longitudinal welding group;
figure 3 shows schematically in cross section the conformation of the film filled with pasta and with edges that are folded and placed alongside the longitudinal welding group;
figure 4 shows an overall perspective view of the transverse ultrasound welding group that is part of said packaging machine;
figure 5 shows said transverse welding group sectioned along a vertical plane passing through the axes of the two rotors;
figure 6 shows said transverse welding group in section along the line VI-VI of figure 5;
figure 7 shows a perspective view of the overall movement of said transverse welding device;
figure 8 shows a perspective view of part of the aforesaid transverse welding device 6 that welds and cuts the edges of film.

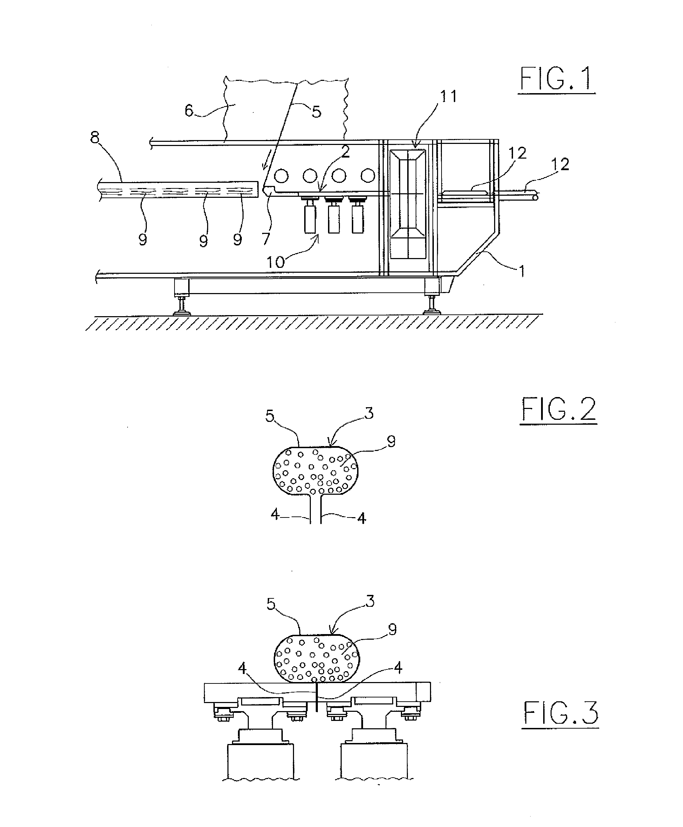

In figure 1 there is shown a packaging machine for long pasta that comprises a base frame 1 along which horizontal path 2 for a tubular envelope 3 extends (figure 2) that is formed by folding downwards and reciprocal approaching of the lateral edges 4 of a film of plastics 5 initially fed in flat form by a feeder 6 (only schematized in figure 1) and then transformed into a tubular envelope by a switching-forming device 7.

A pasta feeder 8 introduces longitudinally a succession of doses 9 of long pasta (or the like) inside the aforesaid tubular envelope 3.

Along said horizontal path 2, downstream of the switching-forming device 7, an ultrasound longitudinal welding group 10 is located, which performs longitudinal welding of the edges of film 4 that are folded and approached to close the tubular envelope 3 at the bottom.

Downstream of the longitudinal welding group 10, a transverse ultrasound welding group 11 is then placed that performs transverse welds and cuts of said tubular envelope 3 to separate the tubular envelope 3 into a succession of single closed envelopes 12 that are separated from one another.

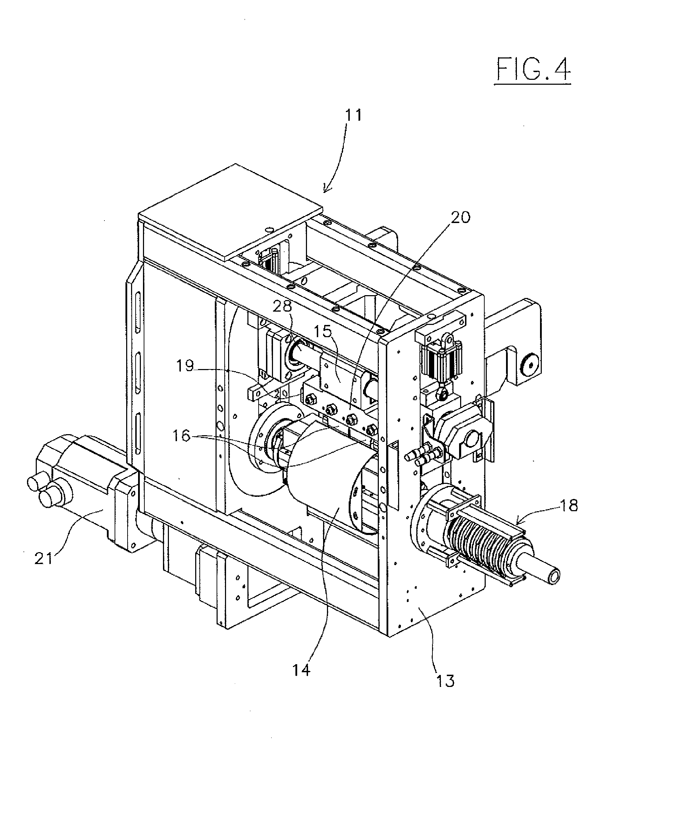

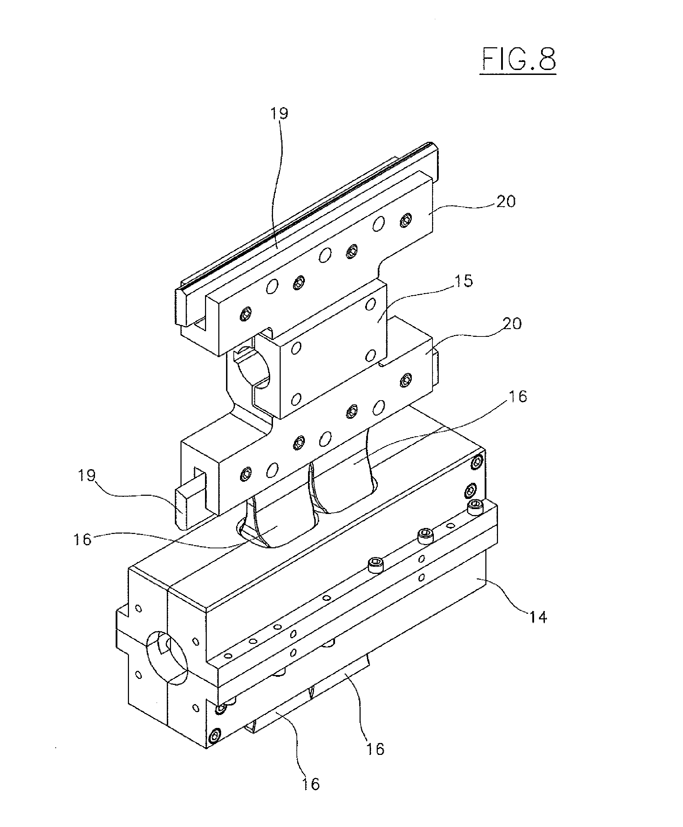

The transverse welding group 11 is shown in greater detail in figures 4-8, where it is seen to comprise a base frame 13 and two rotors 14 and 15 with parallel axes between which the tubular envelope filled with doses of pasta and closed at the bottom is passed that exits from the longitudinal welding group 10.

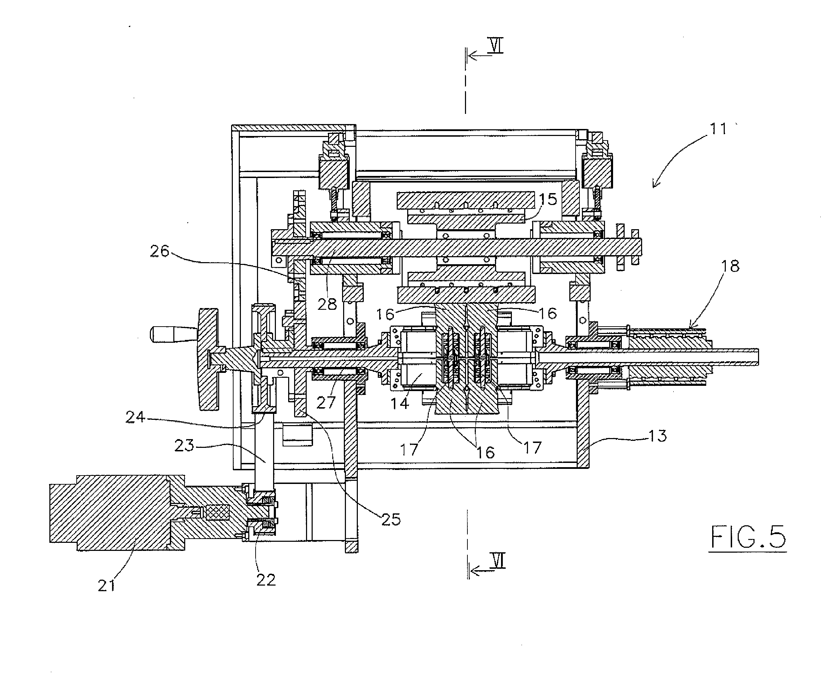

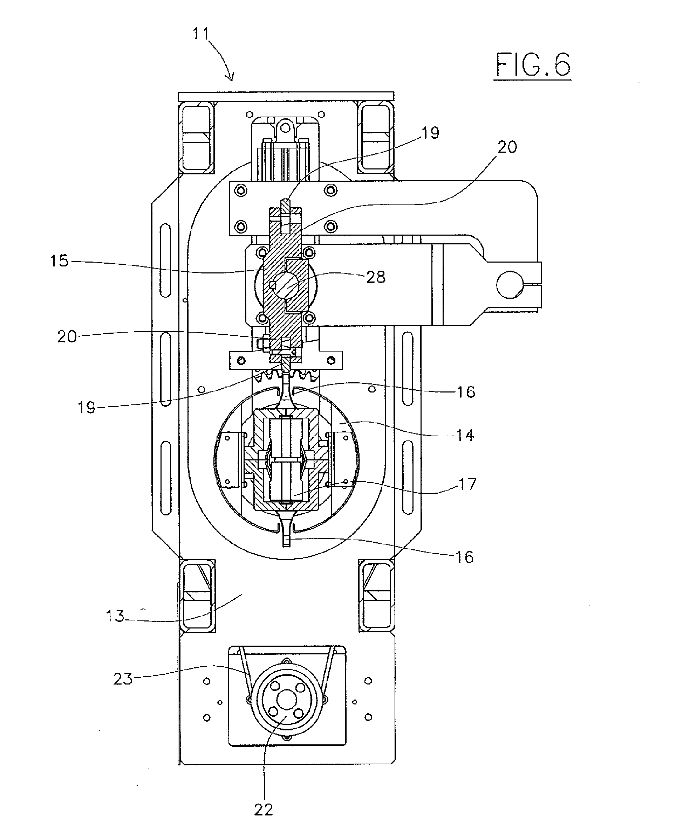

A first rotor 14 takes a first and second pair of approached sonotrodes (electrodes for ultrasound) 16 arranged in diametrically opposite positions (figures 5, 6 and 8) and fed by ultrasound generators 17 located inside the rotor 14 (figures 5 and 6). The ultrasound generators are in turn fed electrically by a direct current generator 18.

A second rotor 15 carries in turn one pair of contrast anvils 19 arranged in diametrically opposite positions (figure 5, 6 and 8) inside respective grooved supports 20.

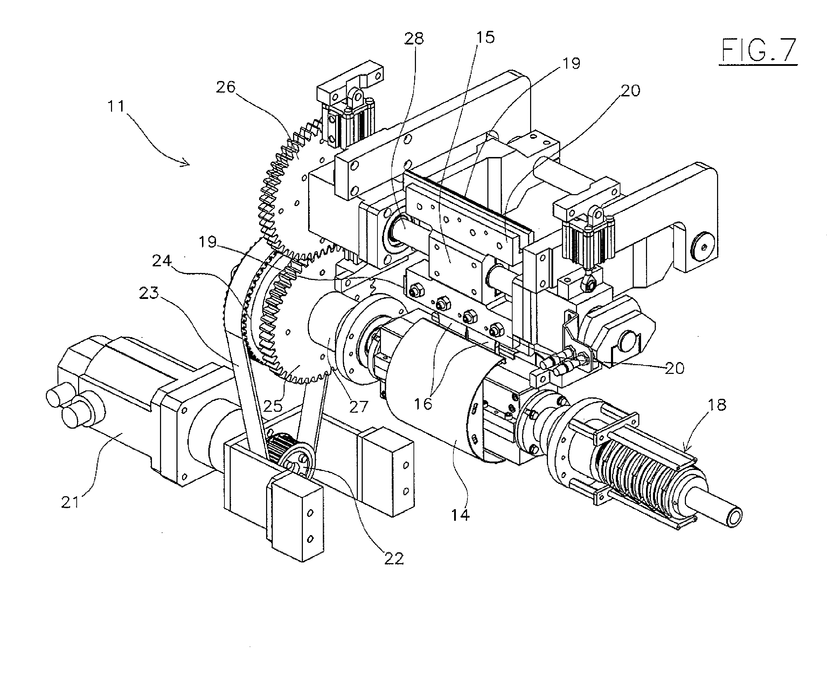

A motor 21 (figures 4, 5 and 7) and a transmission group formed by a cog 22, by a belt 23, by a pulley 24 and by two toothed wheels 25 and 26 mounted on respective parallel shafts 27 and 28 (figures 5 and 7) controls synchronized rotation of the two rotors 14 and 15 with reciprocal phasing such that each sonotrode 16 periodically finds itself in a position facing an anvil 19 (figures 5, 6 and 8) to perform through the vibrations produced by the ultrasound double transverse welding of the superimposed edges of film that are located between one dose of pasta and the other and the cutting of the edges between the two welds to transform the single tubular envelope 3 closed below into single envelopes 12 that are completely closed around respective doses of pasta.

## Claims

1. Packaging machine for pasta, comprising means (6) for feeding a continuous film (5) of plastic material, means (7) for folding the lateral edges (4) of said film (5) to form a horizontal path tubular envelope (3) with lateral edges (4) folded downwards and approached to each other, means (8) for introducing a succession of doses (9) of pasta or the like inside said tubular envelope (3), a longitudinal welding group (10) included in said horizontal path for welding said folded and approached film edges (4) with each other and a transverse welding group (11) arranged downstream to said longitudinal welding group (10) for transversely welding and cutting said tubular envelope (3) for dividing the same envelope into a succession of closed envelopes (12) separated from each other, **characterized in that** said transverse welding group (11) comprises two rotors (14, 15) with parallel axes through which the film edges to be transversely welded and cut are caused to pass, at least a pair of sonotrodes (17) carried in diametrically opposed positions by a first rotor (14) and supplied by an ultrasound generator (17) arranged inside said first rotor (14) and at least a pair of contrast anvils (19) carried in diametrically opposed positions by a second rotor (15), said rotors (14, 15) being rotated in synchronism and in phase with each other so that each one of said sonotrodes (16) and each one of said anvils (19) come periodically to faced positions to carry out a double welding with an intermediate cut of said film edges.

2. Machine according to claim 1, **characterized by** comprising two approached pairs of said sonotrodes (16).

3. Machine according to claim 1 or 2, **characterized by** comprising two ultrasound generators (17).

4. Machine according to anyone of claims 1 to 3, **characterized in that** said longitudinal welding group (10) is of the ultrasound type.
